(19) **Europäisches Patentamt**

**European Patent Office**

**Office européen des brevets**

(11) **EP 1 154 255 B1**

(12) **EUROPÄISCHE PATENTSCHRIFT**

(45) Veröffentlichungstag und Bekanntmachung des Hinweises auf die Patenterteilung:
**17.09.2003 Patentblatt 2003/38**

(51) Int Cl.⁷: **G01N 13/02**, D06F 39/00

(21) Anmeldenummer: **01109910.8**

(22) Anmeldetag: **24.04.2001**

(54) **System zur Bestimmung der Oberflächenspannung einer Lösung, insbesondere einer Tensidlösung**

System for determining the surface tension of a solution, in particular of a surfactant solution

Système pour la détermination de la tension de surface d'une solution, en particulier d'une solution d'un tensio-actif

(84) Benannte Vertragsstaaten:
**AT BE CH CY DE DK ES FI FR GB GR IE IT LI LU MC NL PT SE TR**

(30) Priorität: **10.05.2000 DE 10022863**

(43) Veröffentlichungstag der Anmeldung:
**14.11.2001 Patentblatt 2001/46**

(73) Patentinhaber: **Miele & Cie. KG**
**33332 Gütersloh (DE)**

(72) Erfinder: **Bicker, Rainer**
**32791 Lage (DE)**

(56) Entgegenhaltungen:
**EP-A- 1 063 339**　　　**DE-A- 19 529 787**
**DE-A- 19 653 752**　　　**DE-A- 19 933 631**

**Beschreibung**

Die Erfindung betrifft ein System zur Bestimmung der Oberflächenspannung einer in einem Behälter befindlichen Lösung, insbesondere einer Tensidlösung, nach der Blasendruckmethode, wobei in die Lösung über eine Kapillare ein gasförmiger Volumenstrom eingeleitet und während der Blasenbildung der zeitliche Verlauf des Drucks dieses Volumenstroms betrachtet wird.

Die Messung der dynamischen Oberflächenspannung nach der Blasendruckmethode basiert auf der Abhängigkeit der Oberflächenspannung vom Druck bei der Bildung gekrümmter Oberflächen. Aus der DE 41 12 417 und aus der DE 195 29 787 ist es beispielsweise bekannt, die Waschmittelkonzentration eines Waschmittel-Wasser-Gemischs (Waschflüssigkeit, beispielsweise im Laugenbehälter einer Waschmaschine) durch eine Messung der Oberflächenspannung zu ermitteln. Der Vorteil der Blasendruckmethode ist dabei, dass die Oberflächenspannung an verschieden alten Oberflächen (dynamisch) bestimmt werden kann. Je langsamer eine Blase erzeugt wird, umso mehr Zeit haben Tenside, sich an die Oberfläche zu begeben und die Oberflächenspannung herabzusetzen. Diese Geschwindigkeit der Tenside wird bei dieser Methode mit erfasst (s. ältere Deutsche Patentanmeldung 199 28 390.7).

Bei der Blasendruckmethode wird an einer Kapillaren über einen kontinuierlich anliegenden Luftstrom eine Blase in der Waschflüssigkeit erzeugt. Die Druckdifferenz der sich bildenden und abreißenden Blase ist dann proportional zur Oberflächenspannung. Zur Erzeugung der Blasen wird durch ein enges Kapillarröhrchen ein gasförmiges Medium, i. A. Luft, in die zu sensierende Waschflüssigkeit gebracht. Wird dieses Kapillarröhrchen direkt im Laugenbehälter angeordnet, so besteht die Gefahr, dass die Kapillaröffnung nach einiger Zeit durch Schmutzpartikel verstopft wird. Dieses Problem wird vergrößert, wenn die Gasblasen mit einer Pumpe erzeugt werden und diese nach dem Messvorgang bei gefülltem Laugenbehälter ausgeschaltet wird. Dann läuft Flüssigkeit in die Kapillare und läuft weiter in den Schlauch, an dem die Kapillare angeschlossen ist. Falls sich in diesem Schlauch eine Kalkschicht bildet und sich später löst, werden von der Pumpe die gelösten Teilchen in die Kapillare geblasen und die Kapillare wird verstopft.

Um das zu verhindern, wird in der älteren Deutschen Patentanmeldung 199 28 393.1 vorgeschlagen, bei einer Waschmaschine die Kapillare zur Messung der Oberflächenspannung in einem Gefäß in der Laugenbehälterwand unterzubringen, das durch Schöpfeinrichtungen an der Waschtrommel gefüllt wird. Außerdem sollte es durch zulaufendes Wasser regelmäßig gereinigt werden. Zum Leeren des Gefäßes wird die Unwucht beim Schleudern verwendet. Nachteilig dabei ist, dass das Leeren des Gefäßes durch die Unwucht nicht definiert möglich ist, da mal mehr, mal weniger Unwucht beim Schleudern auftritt. Außerdem ist es nötig, eine Schöpfeinrichtung an der Waschtrommel anzubringen, was aus Platzgründen nicht einfach zu realisieren ist.

Aus der DE 196 53 752 ist ein Verfahren und eine Einrichtung zur Reinigung von Prozessmesszellen mit Kapillaren bekannt, bei dem eine kombinierte Anwendung von Ultraschall in Verbindung mit einem Reinigungsgas- und Flüssigkeitsstrom erfolgt. Für eine breite Anwendung in Geräten der Haushaltstechnik wie Waschmaschinen und Geschirrspülem ist eine solche Einrichtung zu teuer.

Der Erfindung stellt sich somit das Problem, ein System zur Bestimmung der Oberflächenspannung der eingangs genannten Art zu offenbaren, bei dem auf einfache Weise eine Verstopfung der Kapillaren vermieden wird.

Erfindungsgemäß wird dieses Problem durch ein System mit den Merkmalen des Patentanspruchs 1 gelöst. Vorteilhafte Ausgestaltungen und Weiterbildungen der Erfindung ergeben sich aus den nachfolgenden Unteransprüchen.

Durch die erfindungsgemäße Ausbildung des Systems wird sichergestellt, dass die Gasströmung in der Kapillare immer in Richtung der flüssigkeitsgefüllten Blasenkammer verläuft. Damit ist die Verstopfungsgefahr gering. Das gilt auch nach Abschalten der Pumpe, da in der Blasenkammer immer noch ein Unterdruck herrscht, der sich erst mit der Zeit entsprechend der fallenden Flüssigkeitssäule abbaut. Die Anordnung ist prinzipiell immer anwendbar, wenn die Oberflächenspannung ermittelt werden soll und beschränkt sich daher nicht allein auf Waschautomaten.

In einer vorteilhaften Ausführungsform mündet die der Blasenkammer gegenüberliegende Öffnung der Kapillare in eine Messkammer, an die ein Drucksensor angeschlossen ist und die über eine Drossel mit dem Umgebungsdruck in Verbindung steht. Dadurch werden die Blasen an der Kapillaren In einfacher Weise durch die Druckdifferenz zwischen der Flüssigkeitssäule in der Blasenkammer und dem Druck auf der außerhalb der Blasenkammer befindlichen Seite der Kapillaren erzeugt. Es wird nur eine einzige Pumpe benötigt, um die Waschlauge auf eine höheres Niveau zu pumpen und gleichzeitig die Blasen zu erzeugen. Durch die Drossel kann in einfacher Weise der Volumenstrom zwischen der Messkammer und ihrer Umgebung konstant gehalten werden. Die Drossel kann durch einen Luftfilter vor Verschmutzung geschützt werden.

Durch die Anordnung einer weiteren Drossel in der Blasenkammer oberhalb der Mündungshöhe der Kapillaren wird ein schnelleres Absinken der Flüssigkeitssäule in der Blasenkammer nach dem Messvorgang erreicht.

In einer besonders vorteilhaften Ausführungsform des Messsystems ist der Volumenstrom durch die Kapillare über eine mit der Messkammer in Verbindung stehenden Einrichtung zur Druckänderung variierbar.

Hierdurch können Blasen mit unterschiedlichen Oberflächenaltem erzeugt werden und es kann in einfacher Weise das aus der älteren Deutschen Patentanmeldung 199 28 390.7 bekannte Verfahren zur Bestimmung der Konzentration eines Waschmittels durchgeführt werden.

Dabei ist in einfachster Weise die Messkammer über einen Bypass mit der Blasenkammer verbunden, wobei der Bypass oberhalb der Mündungshöhe der Kapillaren in die Blasenkammer mündet und im Bypass eine weitere Drossel angeordnet ist. Bei einer solchen Anordnung ist die Blasenfrequenz abhängig von der Höhe des Flüssigkeitsstandes in der Blasenkammer, somit kann der Pegel aus dem Oberflächenalter bestimmt und in einfacher Weise vermieden werden, dass Lauge in die Pumpe gesaugt wird. Auf eine Regelung der Pumpe kann verzichtet werden. Da das Füllen und Leeren der Blasenkammer langsam geschieht, ändert sich dabei der Blasenvolumenstrom und damit das Oberflächenalter entsprechend. Somit kann man während des Füllens und/oder Leerens der Blasenkammer die Oberflächenspannung in Abhängigkeit vom Oberflächenalter ausmessen.

Ein Ausführungsbeispiel der Erfindung ist in den Zeichnungen rein schematisch dargestellt und wird nachfolgend näher beschrieben. Es zeigt

Figur 1 ein System zur Messung der Oberflächenspannung

Figur 2 den Druckverlauf in einer Anordnung nach Figur 1

Figur 3 das Blasendruckverfahren zur Bestimmung der Oberflächenspannung

Figur 4 ein System zur Erzeugung von Blasen mit unterschiedlichem Oberflächenalter

Figur 5 den Druckverlauf in einer Anordnung nach Figur 4

Figur 6 ein weiteres System zur Erzeugung von Blasen mit unterschiedlichem Oberflächenalter

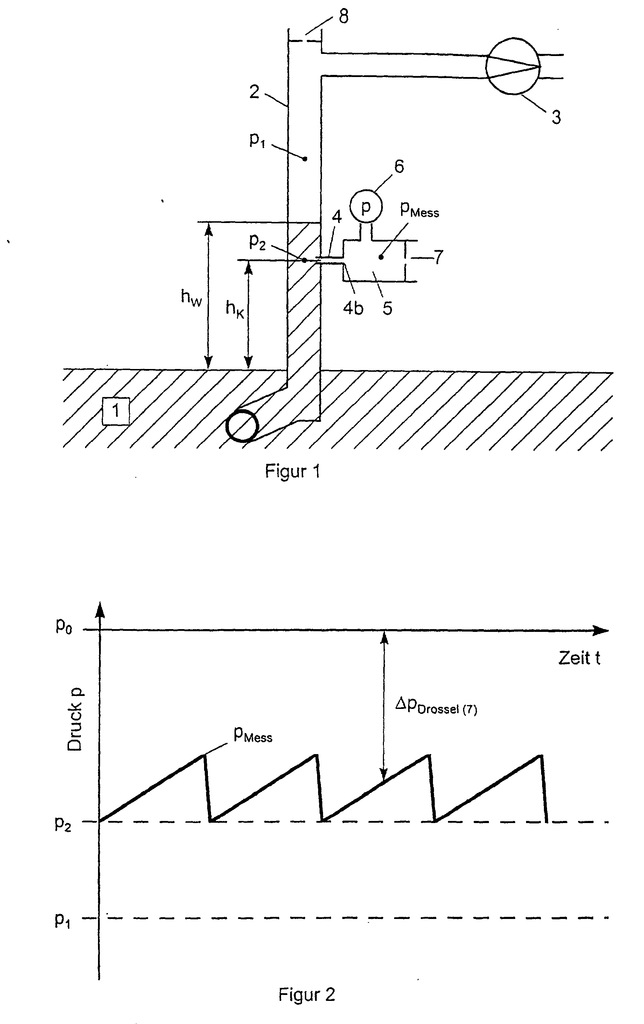

Figur 1 zeigt einen Behälter, beispielsweise den Laugenbehälter einer Waschmaschine, in dem sich eine Lösung in Form eines Waschmittel-Wasser-Gemischs befindet (im folgenden als Waschlauge (1) bezeichnet). Sie ist hier schraffiert dargestellt. In den Laugenbehälter mündet unterhalb des Normalniveaus der Waschlauge (1) eine Blasenkammer (2). Das gegenüberliegende Ende der Blasenkammer (2) ragt aus der Waschlauge (1) heraus und ist mit einer Pumpe (3) verbunden. Mit Hilfe der Pumpe (3) wird ein Unterdruck erzeugt, der die Waschlauge (1) auf die Höhe $h_W$ in der Blasenkammer (2) saugt. In die Blasenkammer (2) mündet in der Höhe $h_K$ eine Kapillare (4). Diese steht auf der der Blasenkammer (2) gegenüberliegenden Seite (4b) mit einer Messkammer (5) in Verbindung, an die ein Drucksensor (6) angeschlossen ist und die durch eine Drossel (7) mit dem umgebenden atmosphärischen Luftdruck (Umgebungsdruck) in Verbindung steht. In der Blasenkammer (2) kann zusätzlich eine weitere Drossel (8) zum schnelleren Absinken der Flüssigkeitssäule eingebaut werden.

In Figur 2 sind die Druckverläufe in diesem System dargestellt. Dabei ist $p_1$ der Druck oberhalb der Flüssigkeitssäule, $p_2$ ist der Druck in der Waschlauge in Höhe der Kapillare (4) und $p_{Mess}$ ist der mit dem Drucksensor (6) zu messende Druck auf der Luftseite der Kapillare (4). Der Druck p, entspricht der Saughöhe $h_w$ der Flüssigkeitssäule im Rohr (Schweredruck):

$$p_1 = p_0 - \rho \cdot g \cdot h_w \qquad (1)$$

$p_1$   Druck oberhalb der Flüssigkeitssäule [Pa]

$p_0$   atmosphärischer Luftdruck (Umgebungsdruck) [Pa]

$\rho$   Dichte der Waschlauge [kg/m$^3$]

$g$   Gravitationskonstante = 9,81 m/s$^2$

$h_w$   Höhe der Flüssigkeitssäule [m]

In der Mündungshöhe $h_K$ der Kapillare (4) herrscht in der Waschlauge ebenfalls ein der Höhe entsprechender Schweredruck:

$$P_2 = P_0 - \rho \cdot g \cdot h_K \qquad (2)$$

$p_2$   Druck in Höhe der Kapillare (4) [Pa]

$h_K$   Höhe der Kapillare (4) [m]

Damit ist der Druck in der Höhe $h_W$ am geringsten und in der Höhe $h_K$ entsprechend höher, aber immer noch geringer als der Umgebungsdruck $p_0$.

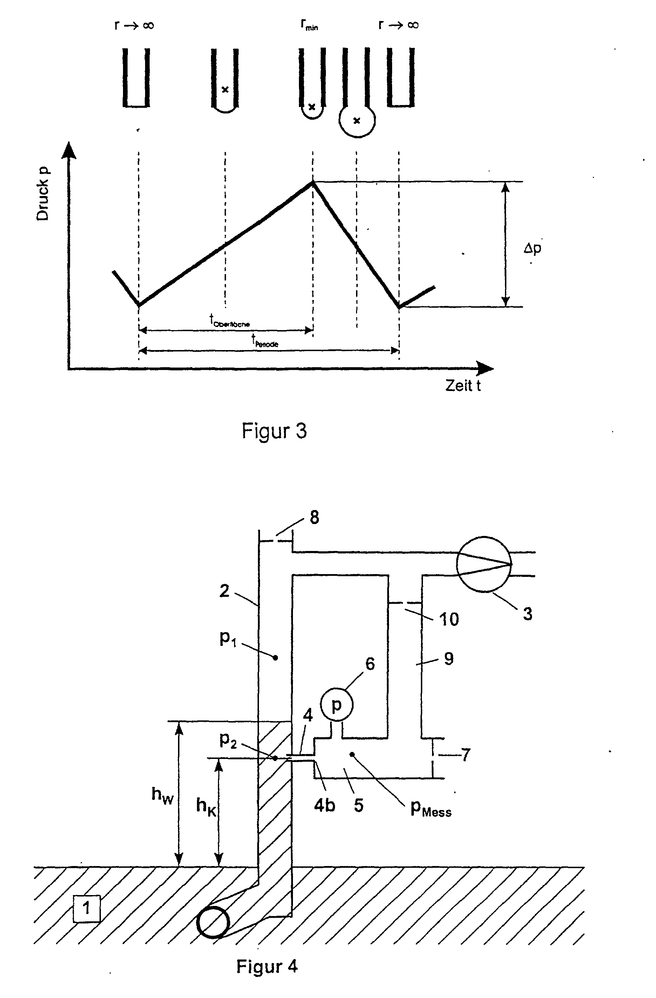

Die Kapillare (4) dient zur Blasenerzeugung. In der Messkammer (5) rechts von der Kapillaren (4) herrscht zunächst der gleiche Unterdruck wie in der Waschlauge (1) in der Blasenkammer (2) links von der Kapillaren (4) (in der Höhe $h_K$). Die Drossel (7) sorgt für die Regelung des Luftvolumenstroms. Aufgrund des Druckunterschieds zum Umgebungsdruck wird Luft aus der Umgebung in die Blasenkammer (2) geleitet und gelangt durch die Kapillare (4) in die Waschlauge (1). Da sich dabei deren Oberfläche verformt, steigt aufgrund der Oberflächenspannung der Gegendruck. Die Höhe dieses Gegendrucks gegenüber dem hydrostatischen Druck im Wasser ist damit ein Maß für die Oberflächenspannung. Die Auswertung dieses Phänomens wird als "Messung der dynamischen Oberflächenspannung nach der Blasendruckmethode" bezeichnet. Der Gegendruck steigt dabei während der Blasenerzeugung durch immer kleiner werdende Radien der Laugen-Luft-Grenzfläche an. Figur 3 zeigt den Druckverlauf zusammen mit den zu den jeweiligen Zeitpunkten gehörenden Formen der Laugen-Luft-Grenzfläche (oben im Bild). Die Kapillare (4) ist jeweils durch die beiden dickeren parallelen Linien angedeutet. Sobald die Blase eine Halbkugelform erreicht, liegt das Druckmaximum vor, anschließend fällt der Druck mit weiterem Wachsen der Blase wieder. Dann reißt die Blase ab und der Anfangszustand mit der waagerechten Oberfläche ist wieder erreicht (r -> ∞ => kein Druck aufgrund der Oberflächenspannung).

Dementsprechend ist der in Figur 2 dargestellte Verlauf des mit dem Drucksensor (6) gemessenen Drucks $p_{Mess}$ zu erklären:

Zu Beginn herrscht in der Messkammer (5) der statische Druck $p_2$. Durch die Druckdifferenz zum Umgebungsdruck wird ein Luftvolumenstrom in der Drossel (7) erzeugt.

$$\Delta p_{Drossel} = P_0 - P_2$$

Die Luft gelangt durch die Kapillare (4) in das Messvolumen 2 und beginnt dort mit der Erzeugung einer Blase. Dabei entsteht aufgrund der Oberflächenspannung ein Gegendruck in der Messkammer (5), der durch den Drucksensor (6) gemessen wird. Entsprechend dem Anstieg des Gegendrucks sinkt die Druckdifferenz an der Drossel (7). Dadurch wird der Volumenstrom der nachströmenden Luft während der Blasenbildung etwas geringer (Der Volumenstrom durch die Drossel (7) ist proportional zur Druckdifferenz). Das ist für diese Betrachtungen allerdings von untergeordneter Bedeutung.

Auf jeden Fall wächst die Blase weiter an bis sie die Halbkugelform und damit das Druckmaximum erreicht hat. Danach fällt der Druck wieder, die Blase löst sich ab und der Ausgangszustand ist wiederhergestellt. Somit ist ein Zusammenhang zwischen der Druckamplitude im gemessenen Druck $p_{Mess}$ und der Oberflächenspannung gegeben.

Um in einer Waschmaschine nur einen einzigen Drucksensor (6) für Niveaumessung und Messung der Oberflächenspannung zu benötigen, kann ein Differenzdrucksensor gemäß dem in der älteren Deutschen Patentanmeldung 199 28 391.5 beschriebenen Verfahren verwendet werden (Niveaustandsmessung auf der einen Seite des Drucksensors bei ausgeschalteter Pumpe (3) und Messung der Oberflächenspannung dynamisch bei eingeschalteter Pumpe (3)). Die Kapillare (4) ist in einer Höhe $h_K$ in der Blasenkammer (2) angebracht, die von der Waschlauge (1) bei ausgeschalteter Pumpe (3) nie erreicht wird. Dadurch ist während der Messung dort immer ein der Höhe $h_K$ entsprechender Unterdruck vorhanden. Sobald die Pumpe (3) zur Unterdruckerzeugung abgeschaltet wird, sinkt das Niveau in der Blasenkammer (2) wieder ab und das Volumen wird durch Luft ersetzt. Die Luftzufuhr geschieht über die Drossel (7) und die Kapillare (4) sowie über eine weitere Drossel (8), die zum schnelleren Absinken der Flüssigkeitssäule zusätzlich eingebaut werden kann, jedoch für die Grundfunktion nicht zwingend erforderlich ist.

Die vorbeschriebene Anordnung besitzt folgenden Nachteil:

Bei bekannten Systemen zur Messung der Oberflächenspannung erfolgt die Luftzufuhr zur Kapillaren (4) über eine regelbare Pumpe, so dass der Luftvolumenstrom einstellbar ist. Dadurch können die Blasen mit unterschiedlicher Frequenz erzeugt werden und der dynamische Charakter der oberflächenaktiven Substanzen in der Waschlauge geht in die Messung mit ein. Eine Waschlauge enthält immer einen Anteil von Tensiden, die eine bestimmte Zeit benötigen, um die Grenzflächen (zu Luft, Wäsche und Schmutz) zu besetzen. Wird nun im Blasendruckverfahren eine Blase durch einen hohen Luftvolumenstrom sehr schnell erzeugt, so haben die Tenside nicht genügend Zeit, um an die Oberfläche zu gelangen und dort zu wirken. Das spiegelt sich dann auch in geringeren Druckdifferenzen im Signal $p_{Mess}$ wider. Somit ist es bei der Blasendruckmethode möglich, das dynamische Verhalten der Tenside durch Messungen bei verschiedenen hohen Luftvolumenströmen und dadurch mehr oder weniger hohen Blasenfrequenzen $f_{Blase} = 1 / t_{Periode}$ bzw. Oberflächenaltem $t_{Oberfläche}$ zu berücksichtigen. Um diesen Vorteil auch bei dem erfindungsgemäß aufgebauten System nutzen zu können, muss eine Möglichkeit vorgesehen werden, um den Luftvolumenstrom durch die Kapillare (4) auf einfache Weise zu variieren.

Eine Lösung dafür zeigt Figur 4. Bei dieser Anordnung ist die Messkammer (5) durch einen Bypass (9) mit der Blasenkammer (2) verbunden, in den Bypass (9) ist eine weitere Drossel (10) eingesetzt. Die Blasenerzeugung an der Kapillaren (4) erfolgt in gleicher Weise wie bei dem in Figur 1 beschriebenen System durch Erzeugung eines Unterdrucks in der Blasenkammer (2) und durch Ausnutzung der Druckdifferenz zwischen Umgebungsdruck und Druck in der Blasenkammer (2). Die Waschlauge (1) wird durch die Unterdruckpumpe (3) angesaugt. Aufgrund der Druckverhältnisse entstehen Luftvolumenströme in den Drosseln (7 und 10).

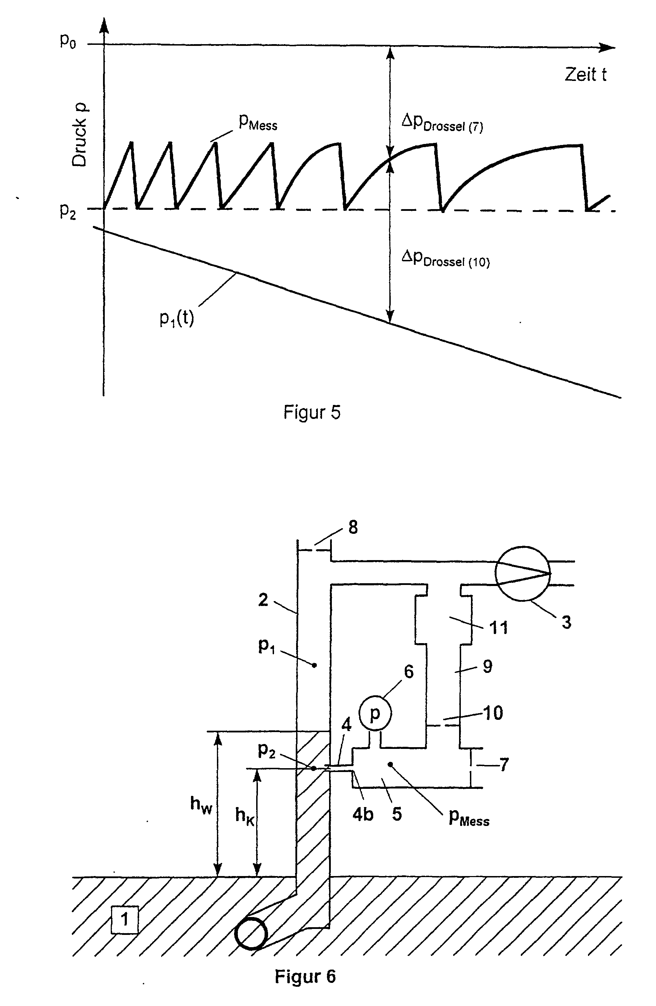

Zur Veranschaulichung sind in Figur 5 die Druckverläufe $p_1$ in der Blasenkammer (2) ,$p_2$ an der Kapillaren (4) in der Höhe $h_K$ und $p_{Mess}$ in der Messkammer (5) dargestellt. Die Drücke $p_1$ und $p_2$ errechnen sich wieder nach den Gleichungen (1) und (2), sind also von der Saughöhe der Flüssigkeitssäule sowie von der Mündungshöhe der Kapillaren (4) abhängig. $p_1$ ist immer geringer als $p_2$, da die Waschlauge immer höher als bis zur Kapillaren (4) in der Blasenkammer (2) stehen muss, um überhaupt eine Messung zu ermöglichen. Die Druckdifferenzen an den Drosseln und ihr Durchlassquerschnitt bestimmen den Luftvolumenstrom, der durch sie hindurchgeht. Die Druckdifferenzen sind in Figur 5 dargestellt. An der Drossel (7) liegt die Druckdifferenz $\Delta p_{Drossel7}$ zwischen der Blasenkammer (2) in Höhe der Kapillaren (4) ($h_K$ => $p_2$) und Umgebung ($p_0$) und an der Drossel (10) liegt die Druckdifferenz $\Delta p_{Drossel10}$ zwischen der Blasenkammer (2) in Höhe der Kapillaren (4) ($h_K$ => $p_2$) und dem Unterdruck oberhalb der Flüs-

sigkeitssäule ($h_w => p_1$). Der Umgebungsdruck ist konstant, während der Unterdruck oberhalb der Flüssigkeitssäule $p_1$ von der Saughöhe in der Blasenkammer (2) abhängt. Ist die Flüssigkeitssäule gerade so hoch wie die Anbringhöhe der Kapillaren (4), so ist

$$p_1 = p_2$$

und ist damit in etwa so hoch wie der Druck $p_{Mess}$ in der Blasenkammer (2). Steigt die Saughöhe weiter an, so ergibt sich eine Druckdifferenz zwischen $p_1$ und $p_{Mess}$, so dass die Druckdifferenz $\Delta p_{Drossel10}$ größer wird. Die Luftvolumenströme durch die Drosseln (7, 10) sind proportional zu den Druckdifferenzen (Der Zusammenhang ist linear, da in den Drosseln laminare Strömung herrscht. Bei turbulenter Strömung ist der Luftvolumenstrom proportional zur Quadratwurzel aus der Druckdifferenz).

Es gibt drei Luftvolumenströme in die bzw. aus der Messkammer (5): Ein Luftvolumenstrom entsteht von der Umgebung durch die Drossel (7) in die Messkammer (5). Er ist von der Druckdifferenz $\Delta p_{Drossel7}$ abhängig und wird daher in erster Linie durch die Anbringhöhe der Kapillare (4) bestimmt. Dieser Luftvolumenstrom teilt sich nun in zwei Luftvolumenströme auf. Der erste entweicht durch die Kapillare (4) und sorgt damit für die Blasenerzeugung. Ein weiterer Luftstrom entweicht durch die Drossel (10) in das Luftvolumen oberhalb der Flüssigkeitssäule in der Blasenkammer (2). Da der Unterdruck oberhalb der Flüssigkeitssäule von der Saughöhe $h_w$ abhängt, ist der Luftvolumenstrom durch die Drossel (10) durch die Saughöhe $h_w$ einstellbar. Je höher die Saughöhe, umso größer wird der Luftvolumenstrom durch die Drossel (10). Da der mittlere Luftvolumenstrom durch die Drossel (10) bei unverändertem Niveau der Waschlauge (1) in der Blasenkammer (2) konstant ist, führt der mit der Saughöhe steigende Luftvolumenstrom durch die Drossel (10) zu einer Verringerung des Luftvolumenstroms durch die Kapillare (4) und die Blasenfrequenz sinkt. Das Ziel ist damit erreicht: Die Blasenfrequenz (bzw. das Oberflächenalter) ist durch einfaches Verändern des Niveauhöhe $h_w$ einstellbar.

Zur Dimensionierung können Drosseln mit einstellbarem Durchlassquerschnitt eingesetzt werden. Die Drossel (10) wird zunächst verschlossen und die Drossel (7) wird so eingestellt, dass die maximale Blasenfrequenz bzw. das minimale Oberflächenalter erreicht wird. Anschließend wird die Blasenkammer (2) durch Ansaugen der Pumpe (3) bis auf das Niveau, bei dem die minimale Blasenfrequenz (bzw. das maximale Oberflächenalter) erreicht werden soll, gefüllt. Mit der Drossel (10) wird dann die minimale Blasenfrequenz eingestellt. Dann wird der Abgleich so lange wiederholt (wieder Drossel für die maximale und Drossel für die minimale Blasenfrequenz), bis der Soll-Blasenfrequenzbereich realisiert ist. Anschließend werden die Drosseln ausgebaut, die Druckverluste der Drosseln (7,10) ausgemessen und die einstellbaren Drosseln durch entsprechende feste Drosseln ersetzt.

Auf eine Regelung der Pumpe (3) kann verzichtet werden. Da das Füllen und Leeren der Blasenkammer (2) langsam geschieht, ändert sich dabei der Blasenvolumenstrom und damit das Oberflächenalter entsprechend. Somit kann man während des Füllens und/oder Leerens der Blasenkammer (2) die Oberflächenspannung in Abhängigkeit vom Oberflächenalter ausmessen. Bei dem in Figur 4 dargestellten Messsystem können durch die Rückkopplung über den Bypass (9) Störungen im Verlauf des Drucksignals auftreten, die sich durch eine Schwankung der Spitzenwerte bemerkbar machen. Diese lassen sich durch die in Figur 6 dargestellte Anordnung eines Puffervolumens (11) im Bypass (9) beseitigen.

**Patentansprüche**

1.  System zur Bestimmung der Oberflächenspannung einer in einem Behälter befindlichen Lösung, insbesondere einer Tensidlösung (Waschlauge 1), nach der Blasendruckmethode, wobei in die Lösung über eine Kapillare (4) ein gasförmiger Volumenstrom eingeleitet und während der Blasenbildung der zeitliche Verlauf des Drucks dieses Volumenstroms betrachtet wird,
    **dadurch gekennzeichnet,**
    **dass** die Kapillare (4) in eine Blasenkammer (2) mündet, in der durch Unterdruck eine über die Mündungshöhe der Kapillaren (4) ansteigende Flüssigkeitssäule erzeugbar ist.

2.  System zur Bestimmung der Oberflächenspannung nach Anspruch 1,
    **dadurch gekennzeichnet,**
    **dass** die der Blasenkammer (2) gegenüberliegende Öffnung der Kapillare (4) in eine Messkammer (5) mündet, an die ein Drucksensor (6) angeschlossen ist und die über eine Drossel (7) mit dem umgebenden atmosphärischen Luftdruck (Umgebungsdruck $p_0$) in Verbindung steht.

3.  System zur Bestimmung der Oberflächenspannung nach einem der Ansprüche 1 oder 2,
    **dadurch gekennzeichnet,**
    **dass** in der Blasenkammer (2) oberhalb der Mündungshöhe der Kapillaren (4) eine weitere Drossel (8) angeordnet ist.

4.  System zur Bestimmung der Oberflächenspannung nach mindestens einem der Ansprüche 1 bis 3,
    **dadurch gekennzeichnet,**
    **dass** der Volumenstrom durch die Kapillare (4) über eine mit der Messkammer (5) verbundene Einrichtung zur Druckänderung variierbar ist.

**5.** System zur Bestimmung der Oberflächenspannung nach Anspruch 4, **dadurch gekennzeichnet, dass** die Messkammer (5) über einen Bypass (9) mit der Blasenkammer (2) verbunden ist, wobei der Bypass (9) oberhalb der Mündungshöhe der Kapillaren (4) in die Blasenkammer (2) mündet und wobei im Bypass (9) eine weitere Drossel (10) angeordnet ist.

**Claims**

**1.** System for determining the surface tension of a solution situated in a container, more especially a surfactant solution (washing liquid 1), according to the bubble pressure method, a gaseous volumetric flow being introduced into the solution via a capillary tube (4), and the development of the pressure of this volumetric flow, with respect to time, being observed during the formation of bubbles, **characterised in that** the capillary tube (4) extends into a bubble chamber (2), in which a liquid column, which rises above the mouth height of the capillary tube (4), can be produced by reduced pressure.

**2.** System for determining the surface tension according to claim 1, **characterised in that** the opening of the capillary tube (4), situated opposite the bubble chamber (2), extends into a measuring chamber (5), to which a pressure sensor (6) is connected, and which communicates with the surrounding atmospheric air pressure (ambient pressure $p_0$) via a shut-off means (7).

**3.** System for determining the surface tension according to one of claims 1 or 2, **characterised in that** an additional shut-off means (8) is disposed in the bubble chamber (2) above the mouth height of the capillary tube (4).

**4.** System for determining the surface tension according to at least one of claims 1 to 3, **characterised in that** the volumetric flow through the capillary tube (4) is variable via a means for changing pressure, which means is connected to the measuring chamber (5).

**5.** System for determining the surface tension according to claim 4, **characterised in that** the measuring chamber (5) is connected to the bubble chamber (2) via a bypass (9), the bypass (9) extending into the bubble chamber (2) above the mouth height of the capillary tube (4), and an additional shut-off means (10) being disposed in the bypass (9).

**Revendications**

**1.** Système pour la détermination de la tension de surface d'une solution se trouvant dans un récipient, en particulier d'une solution d'un tensio-actif (lessive 1), d'après la méthode de la pression des bulles, un débit volumétrique en forme de gaz étant envoyé dans la solution par le biais d'un tube capillaire (4) et la variation dans le temps de la pression de ce débit volumétrique étant observée pendant la formation des bulles, **caractérisé en ce que** le tube capillaire (4) débouche dans une chambre à bulles (2) dans laquelle une colonne de liquide montant au-dessus de la hauteur d'orifice du tube capillaire peut être générée par dépression.

**2.** Système pour la détermination de la tension de surface selon là revendication 1, **caractérisé en ce que** l'ouverture du tube capillaire (4) située en face de la chambre à bulles (2) débouche dans une chambre de mesure (5) à laquelle est branché un capteur de pression (6) et qui est reliée à la pression de l'air atmosphérique environnant (pression ambiante $p_0$) par un dispositif d'étranglement (7).

**3.** Système pour la détermination de la tension de surface selon la revendication 1 ou 2, **caractérisé en ce que** un autre dispositif d'étranglement (8) est disposé dans la chambre à bulles (2) au-dessus de la hauteur d'orifice du tube capillaire (4).

**4.** Système pour la détermination de la tension de surface selon au moins l'une quelconque des revendications 1 à 3, **caractérisé en ce que** le débit volumétrique à travers le tube capillaire (4) peut être varié par le biais d'un dispositif relié à la chambre de mesure (5) et destiné à modifier la pression.

**5.** Système pour la détermination de la tension de surface selon la revendication 4, **caractérisé en ce que** la chambre de mesure (5) est reliée à la chambre à bulles (2) par une dérivation (9), la dérivation (9) débouchant dans la chambre à bulles (2) au-dessus de la hauteur d'orifice du tube capillaire (4) et un autre dispositif d'étranglement (10) étant disposé dans la dérivation (9).

Figur 1

Figur 2

Figur 3

Figur 4

p₀

Zeit t

Druck p

$p_{Mess}$

$\Delta p_{Drossel\,(7)}$

$p_2$

$\Delta p_{Drossel\,(10)}$

$p_1(t)$

Figur 5

8

2

$p_1$

11

3

9

6

10

4

$p_2$

7

$h_W$

$h_K$

4b    5

$p_{Mess}$

1

Figur 6